# EUROPEAN PATENT SPECIFICATION

(11) **EP 3 909 904 B1**
(45) Date of publication and mention of the grant of the patent: **10.07.2024**
(21) Application number: 20305466.3
(22) Date of filing: 11.05.2020
(51) Int. Cl.: B66C 23/20, B66C 23/32, F03D 13/10, E04H 12/34

(54) **A SYSTEM FOR THE ERECTION OF A WIND TURBINE TOWER AND A CORRESPONDING METHOD OF ERECTION OF A TOWER**
SYSTEM ZUM AUFRICHTEN EINES WINDTURBINENTURMS UND ZUGEHÖRIGES VERFAHREN ZUM AUFRICHTEN EINES TURMS
SYSTÈME POUR L'ÉRECTION D'UNE TOUR D'ÉOLIENNE ET, PROCÉDÉ D'ÉRECTION CORRESPONDANT D'UNE TOUR

(43) Date of publication of application: 17.11.2021
(73) Proprietor: Soletanche Freyssinet, 92500 Rueil Malmaison (FR)
(72) Inventor: LEBON, Jean-Daniel, 78100 Saint-Germain-en-Laye (FR); DE WILJES, Guillaume, 75015 Paris (FR); LAURENT, Eric, 91790 Boissy- sous-Saint -Yvon (FR); SCOTTO, Giulio Maria, 92100 Boulogne Billancourt (IT); BLANCHET, Thomas, 92500 Rueil-Malmaison (FR)
(74) Representative: Cabinet Nony

(56) References cited:
- WO-A1-2018/185111
- CN-A- 104 370 220
- JP-A- H1 182 285

## Description

### Background of the invention

Due to the increasing demand for more renewable energy to allow carbon emission reductions, and the pressure to reduce the levelized cost of energy, turbine manufacturers have been developing more powerful turbines with longer blades and set at higher heights. Most of the largest OEM companies are now commercializing onshore turbine platforms over 4 MW and some are even reaching 6 MW with rotor diameters up to 170 m. In addition, these machines are planned to be erected at a minimum hub height of 120 m and even as high as 165 m for some platforms.

Conventional cranes are not satisfactory to construct these wind towers as they will require longer booms and heavier counterweights. The increase in crane size would also result in the need for larger platforms on site in order to allow the mobilization of such cranes.

Patent application JPH1182285 discloses a climbing crane installed at the tower base part of a wind power generator, and a tower block mounted and jointed on/to the tower base part with the climbing crane. While the climbing crane is being lifted with the tower block, the tower part of this wind power generator is constructed.

### Summary of the invention

The invention aims at overcoming the technical challenges arising from the demand for larger turbines on taller towers, while at the time keeping the construction cost as low as possible.

The present invention relates to a system for the erection of a tower comprising superimposed tower ring elements, the system comprising:
- A self-climbing crane comprising:
   ∘ An annular base structure to be positioned around the tower under construction,
   ∘ two slewing lifting booms carried by said base structure,
   ∘ movable radial beams carried by the base structure and configured to engage into corresponding docking zones of the tower under construction to immobilize the base structure relative to the tower,
   ∘ hoisting winches carried by the base structure for elevating the crane along the tower under construction.

The invention allows faster and more cost-effective erection of wind turbine towers.

In addition, the ability to erect taller towers also allows an increase in annual energy production rate thus decreasing the levelized cost of energy.

The invention offers tandem lifting capacity for hoisting a heavy nacelle onto the tower.

The system allows the crane to operate with a minimum number of elevated stations and corresponding docking zones. Several tower elements may be erected from the same lifting station. For example, a 120m tower may be erected using two elevated lifting stations only and a 150m tower may be erected using three elevated lifting stations only.

Once the erection is complete, the crane may be lowered to the ground in one simple operation using the same winches that were used to reach the lifting stations.

The invention allows the crane to be relatively light and easy to operate and enables to minimize the forces applied onto the tower walls which may in return enable savings on the tower materials.

Preferably, the crane is configured so that it may be split if desired in two parts to work independently at ground level.

The already erected tower section underneath an elevated lifting station is used as a structural mast. In order to make the mast resistant enough to support the bending moments due to construction phases, the tower is preferably progressively prestressed. The setup of the prestressing cables may be done using the booms. Temporary erection is also made possible by using whenever necessary vertical connector bars for the tower part under erection, and not yet prestressed.

Preferably, the slewing lifting booms are luffing booms, i.e. booms that allow to raise or lower the outer end of the boom of the crane to move its load horizontally.

The invention enables a fast lowering in one operation.

Preferably, the crane comprises legs allowing it to rest on the ground for the erection of a first section of the tower. The crane is then capable of working at ground level and at elevated stations, and to erect the complete tower. There is no need for earlier construction of a short tower section for the equipment to clamp on before starting erection of the remaining tower part. The system may allow to minimize the number of lifts before reaching the next elevated erection station.

The invention enables the use of simple anchoring devices on the tower allowing safe loads transfers with minimum applied loads.

Preferably, the crane comprises roller guides configured for rolling on an external surface of the tower for guiding the base structure along the tower during its vertical displacement.

The roller guides are advantageously movable radially to adapt to the outside diameter of the tower and the system preferably comprises a mechanism to control the radial displacement of the roller guides to ensure a desired control force is applied by the roller guides to the tower.

The base structure allows minimal anchoring forces and no punching forces on the tower wall.

The roller guides may be provided with stops configured to engage temporary docking bars positioned on the tower under construction to immobilize the crane at a desired height when the crane is elevated along the tower.

Each hoisting winch preferably comprises a pair of drums with respective hoisting cables wound thereon and connected to one another at one end.

The docking zones of the tower preferably comprises windows into which the radial beams can engage, each radial beam preferably carrying a clamping mechanism to clamp the beam inside the window after insertion therein. The windows on the tower walls allow a fast anchoring and can provide natural light inside the tower during service.

The clamping mechanism may comprise at least one vertical jack, and preferably vertical jacks. Each radial beam may be provided with a joint allowing a rotation of the at least one vertical jack around a rotation axis perpendicular to the longitudinal axis of the radial beam. This rotation axis may be substantially horizontal.

Each radial beam may be rotatable around a longitudinal axis thereof relative to the supporting structure. Each radial beam may be of circular cross section for that purpose.

The system preferably comprises hoisting cables anchoring devices to be anchored to the tower for supporting hoisting winch cables used for lifting the crane.

The base structure preferably comprises two halves that can be disassembled from each other for transportation, each half comprising a boom supporting section and two radial beam and winch supporting sections. This allows fast demobilization and remobilization from one erected tower to the next pad where the next tower is to be erected.

Each half may comprise an articulated section that is hinged to a radial beam and winch supporting section.

Each boom is advantageously foldable for transportation. Each boom may comprise a bottom truss, a top truss with an articulated jib and a central part around which the bottom and the top truss are hinged. This combined with the possibility of splitting the annular supporting structure into two halves enables fast demobilization and remobilization of the crane.

The central part may be connected to the top and bottom trusses by means of pin joints on an outer chord of the boom and articulated telescopic struts on an inner chord of the boom. The boom preferably comprises folding jacks to pivot the top truss relative to the bottom truss.

The system preferably comprises a mobile internal platform equipped with winches, with for each winch a set of pulleys and brackets to be fixed to the tower under construction, with for each pulley a messenger wire and a pulling wire, and security cables to secure the platform to the brackets.

The present invention also relates to a method for erecting a tower comprising superimposed ring elements, using a system in accordance with the invention, as defined above, the method comprising:
- Assembling a first section of the tower by assembling ring elements with the crane resting on the ground,
- after erection of the first section, assembling a second section of the tower with the crane resting on the previously assembled first section.

The method may comprise assembling a third section with the crane resting on the previously assembled second section.

The method may comprise erecting a nacelle and blades of a wind turbine using the crane resting on a section of the tower.

The method may comprise lifting the crane along the tower upon completion of a section using the hoisting winches and corresponding hoisting winch cables hanging from hoisting cables anchoring devices fixed on the tower under construction.

The hoisting of a ring element or a nacelle or alternator may be performed simultaneously by the two booms working together. The working in tandem allows lifting heavy loads. In a variant, the hoisting of ring elements is performed alternatively by the two booms, a ring element under assembly hanging from one boom while a next ring element is being prepared on the ground for hoisting by the other boom.

Preferably, the tower comprises windows and the method comprises securing the crane to the tower under construction by engaging the radial beams into the windows.

The method may comprise, after insertion of a radial beam in a corresponding window, clamping said beam inside the window.

The method may comprise stressing post-tensioning cables extending between an anchorage in a foundation of the tower and a top ring element of an erected section, before hoisting the crane along that section.

The method may comprise, after erection of a section of the tower, anchoring on a ring element of that section hoisting cables anchoring devices for hanging therefrom the hoisting winch cables.

After the crane has been lifted along an erected section using hoisting cables anchoring devices fixed on a ring element of the erected section and from which hoisting cables connected to the hoisting winches are hanging, the crane may be secured to the erected section and the hoisting cables anchoring devices may be picked up using the booms.

The method may comprise lifting a mobile platform inside the tower under construction for installation of hoisting cables anchoring devices on top of an erected section.

A last erected ring being provided with pulleys fixed on brackets, each pulley being provided with a messenger wire and a pulling wire attached to the messenger wire, the lifting of the mobile platform may comprise, once a new ring element is set over said last erected ring element:
- attaching winches of the mobile platform to the messenger wires,
- lifting the messenger wires using the pulling wires while at the same time unreeling the winches,
- once at their final position, attaching the messenger wires to the tower on said brackets,
- lifting the mobile platform using the winches,
- once the platform has reached a working level,
- connecting the mobile platform to the new ring element using security cables, and
- releasing the winches to fully transfer the mobile platform weight to the security cables.

As a last erected ring element is provided with a first set of ropes tied to hoisting cable anchoring devices secured to said last erected ring element and arranged inside the tower, the mounting of a top ring element above said last erected ring element may comprise, said top ring element being provided with openings through which a second set of ropes is placed:
- maintaining with the crane the top ring element with some gap above the previously erected ring element,
- from the inside of the tower under construction, tying together ropes of the first and second sets,
- pushing the ropes thus connected outside the tower,
- lowering the top ring element on the last erected ring element.

After completion of the tower up to the end of blade installation and lowering of the crane to the ground, the removal of the remaining hoisting cables anchoring devices may comprise:
- inserting telescopic beams provided with pulleys through the openings of the top ring element, the ropes of the second set of ropes engaging in said pulleys and being connected to rope pass-through type winches,
- disconnecting the hoisting cables anchoring devices from the ring element to which they were secured,
- lowering the hoisting cables anchoring devices using the telescopic beams and the rope pass-through type winches, while at the same time winding the hoisting cables around drums of the hoisting winches,
- at the end of the winding operation, disconnecting the ropes connected to the pass-through type winches from the hoisting cables, then rewinding these ropes using the pass-through type winches, and
- removing the telescopic beams from the openings of the top ring element.

After removal of the telescopic beams, the openings of the top ring element may be closed using caps fixed on sockets provided on the inside of the top ring element.

The tower may be of a height greater than 100m. The tower may comprise at least two sections of different outside diameters.

An embodiment not forming part of the present claimed invention relates to a method for transportation of the crane, wherein the crane base structure is split in two halves and each boom is folded. Each half may comprise one boom supporting section, two radial beam and winch supporting sections, and one opening section.

An embodiment not forming part of the present claimed invention relates to a tower comprising superimposed ring elements assembled using the method as defined above, one or more of the ring elements comprising at least one of
- anchoring holes for anchoring hoist cables anchoring devices,
- brackets on their internal surface for securing security cables connected to a mobile platform and/or pulleys for lifting/lowering of the mobile platform,
- openings for introduction of telescopic beams used for the removal of hoisting cables anchoring devices,
- holes for securing temporary docking bars on their external surface serving as stops for roller guides of the crane during lifting thereof.

Some ring elements may further comprise windows for introduction therein of radial beams of the crane. Preferably, these ring elements each comprise four windows.

### BRIEF DESCRIPTION OF THE DRAWINGS

FIG. 1 is a perspective view of an exemplary embodiment of a system made in accordance with the present invention,
FIG.2 is a partial view of the crane,

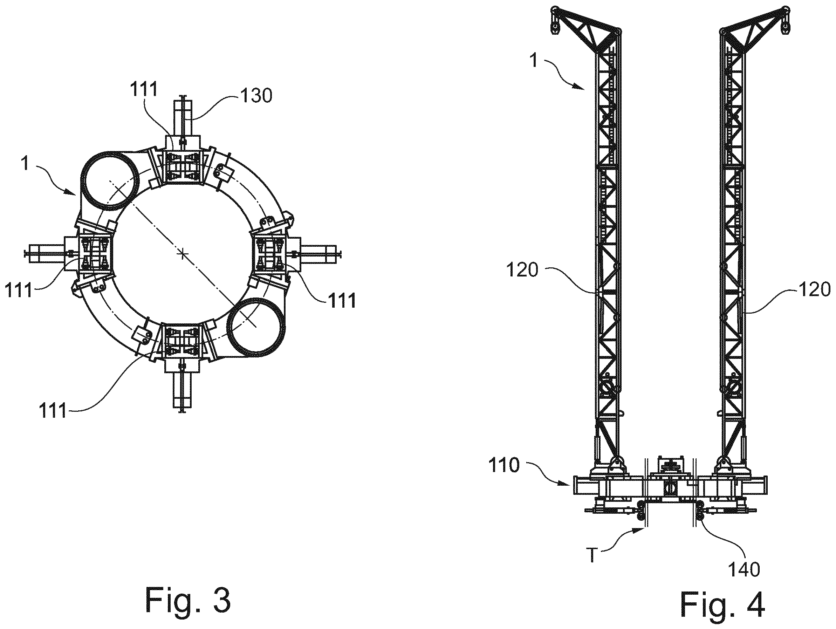

FIG.3 is a plan view of the crane,
FIG.4 is a side elevational view of the crane,
FIG.5A to FIG.5D illustrate main erection stages,
FIG.6 is a side elevational view of the crane at ground station,
FIG.7 is a similar view to FIG.6 with first ring element installed,
FIG.8 shows the system before lifting of the crane,

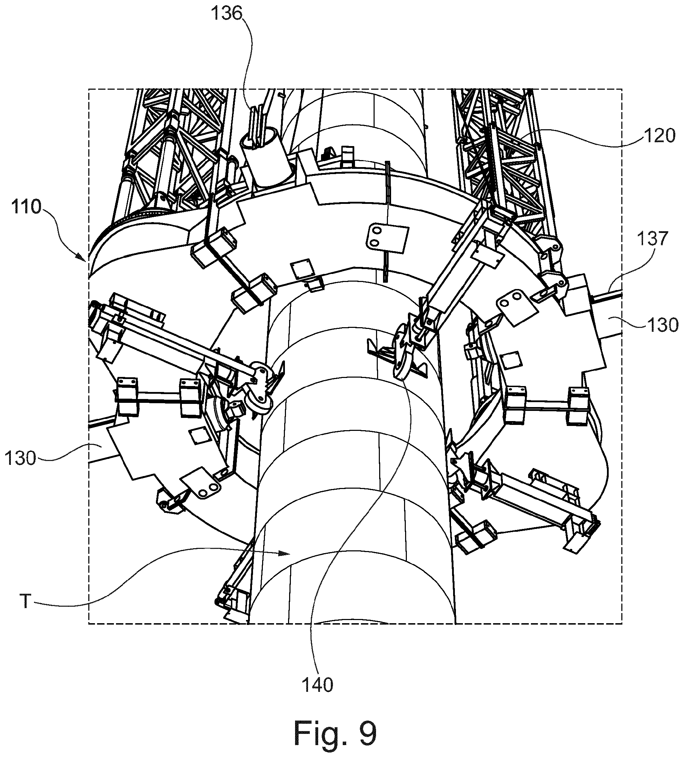

FIG.9 shows the crane during the lifting operation,
FIG. 10 shows the crane about to reach the next elevated station,
FIG. 11 shows the crane when reaching the elevated station,
FIG. 12 illustrates the introduction of a radial beam into a corresponding window,
FIG. 13 shows the radial beam clamped inside the window,

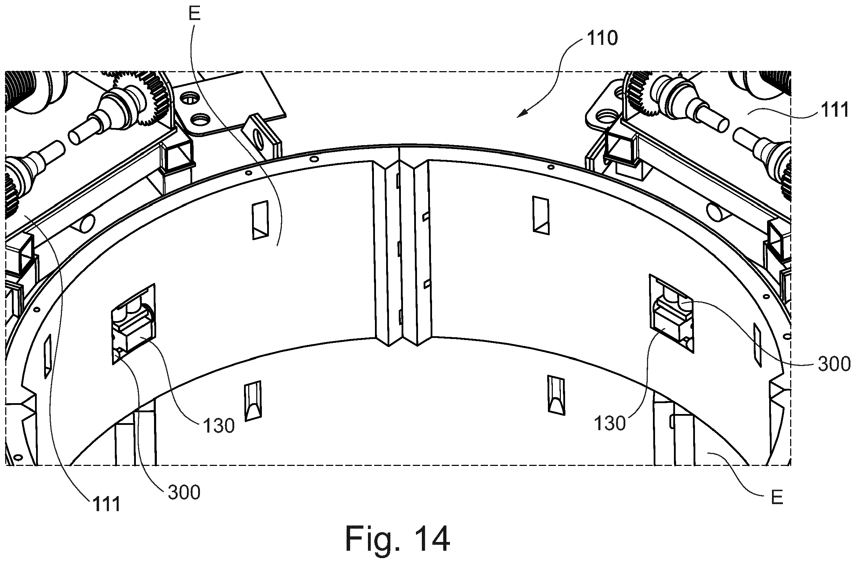

FIG. 14 is a partial view of the crane after the clamping operation,

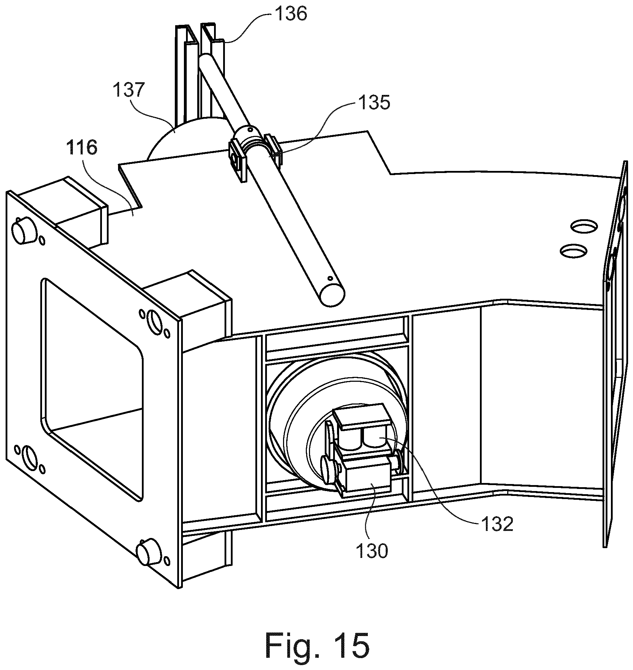

FIG. 15 is a partial perspective view of the radial beam,
FIG. 16 is a longitudinal section of the radial beam,

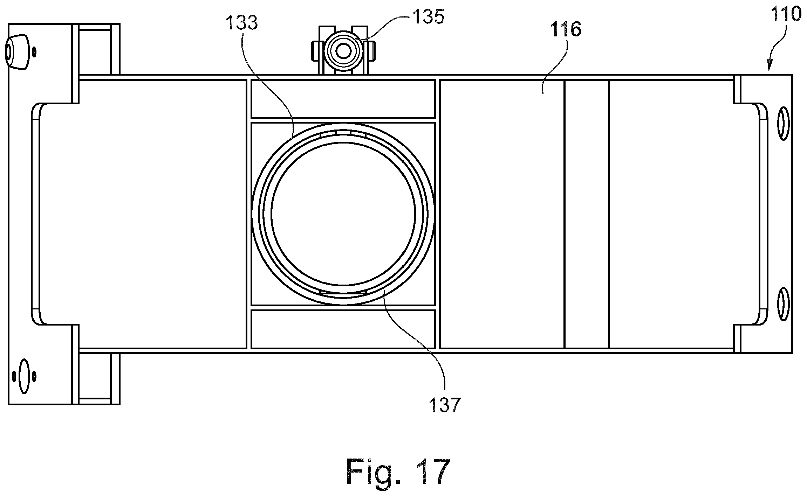

FIG. 17 is a cross-section of the radial beam,
FIG. 18 is a perspective view of a mobile platform,
FIG. 19A to FIG. 19E illustrate the use of the mobile platform during tower erection,
FIG.20 shows the system on top of a section of the tower,
FIG.21A to FIG.21H illustrate the installation of the ropes used for picking up the anchoring devices,

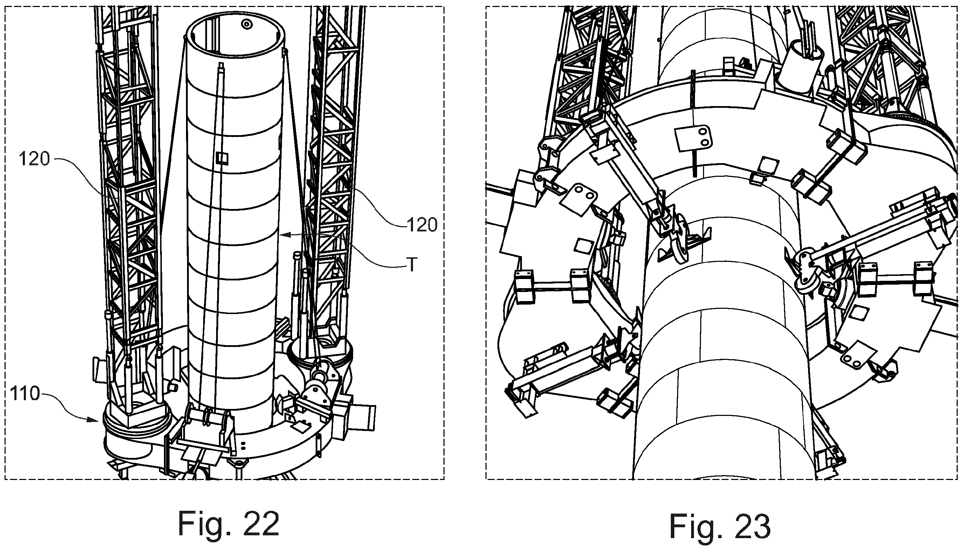

FIG.22 shows the crane at the beginning of the lifting operation,
FIG.23 shows the crane during the lifting operation,

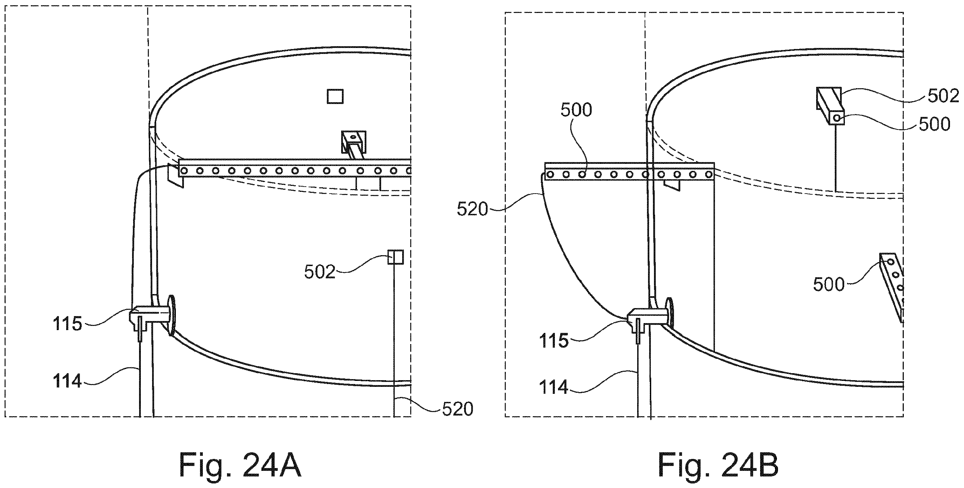

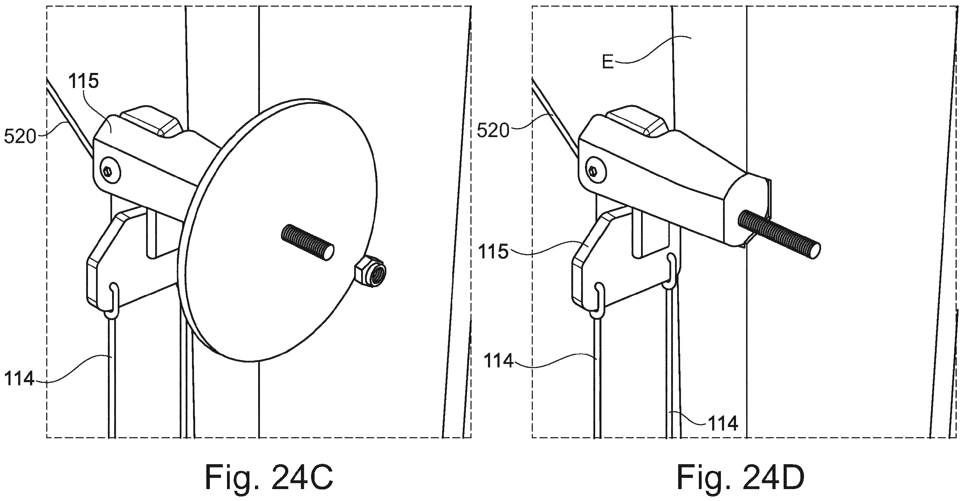

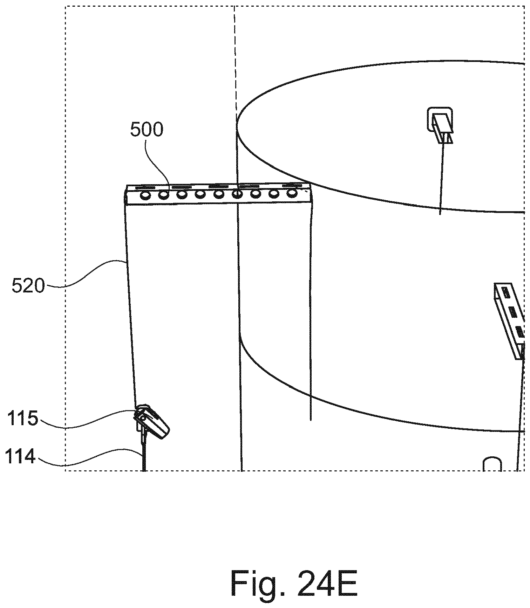

FIG.24A to FIG.24E illustrate the removal of the anchoring devices,
FIG.25 shows in isolation a boom of the crane,
FIG.26 shows in more details the central section of the boom,
FIG.27 shows in more details the base section of the boom,
FIG.28 is a perspective view in isolation of the base of the crane,
FIG.29 illustrates the splitting of the base in two halves,
FIG.30 illustrates the transportation of the crane,
FIG.31 is a side view of the transportation vehicle loaded with the crane,
FIG.32 illustrates the unfolding of a boom.

The invention will now be described in relation with a tower T made of superimposed concrete ring elements E. However, the invention also applies to towers made of tubular steel sections built in a similar manner.

As show in the figures, a system for tower erection made in accordance with the present invention comprises a self-climbing crane 1 and various additional equipment including hoisting cables anchoring devices and a mobile platform that is used in conjunction with the crane during tower erection as will be detailed below.

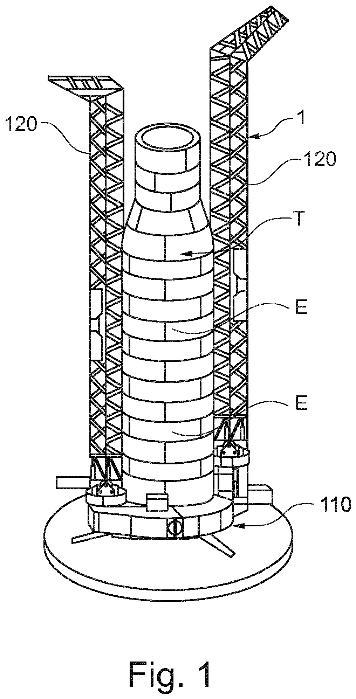

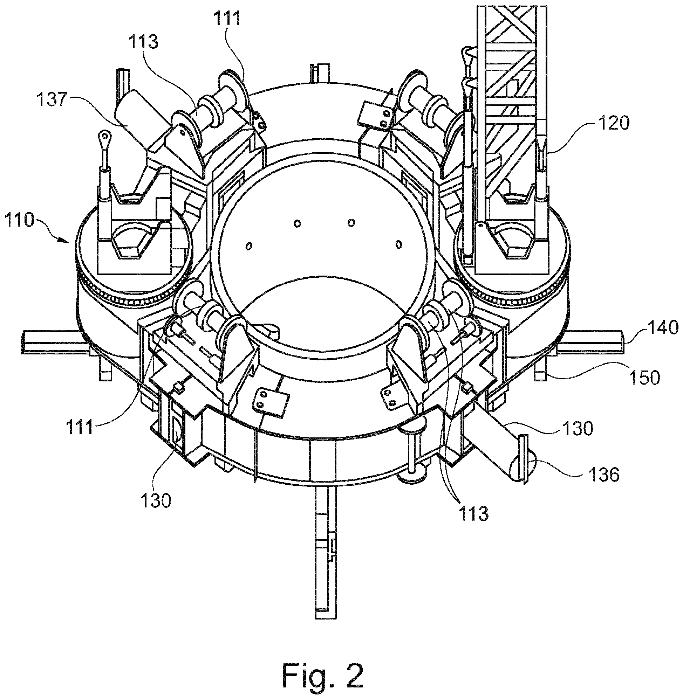

As visible in FIGs.1 and 2, the crane 1 comprises an annular base structure 110 carrying two slewing lifting booms 120, only one being shown in this figure for sake of clarity.

The base structure 110 carries radial beams 130 that serve to fasten the crane to the tower T at an elevated station. In the present embodiment, the crane 1 comprises four radial beams 130, positioned at 90° from each other around a vertical axis of the base structure 110.

Four winches 111 are carried by the base structure 110, each having a same angular position as a corresponding radial beam 130.

The base structure 110 also carries roller guides 140 which are pushed against the tower wall by corresponding hydraulic jacks during the vertical displacement of the base structure 110 along the tower T. These jacks are combined with springs to ensure smooth contact of the roller guides 140 against the tower wall.

The roller guides 140 are angularly offset from the radial beams 130 for example by 45°.

The base structure 110 comprises legs 150 allowing the crane 1 to rest on ground. In the described embodiment, there are two pairs of three supporting legs 150, two of which are combined with the roller guides 140.

The inner diameter of the base structure 110 is adapted for a given tower range. The inner diameter of the base structure 110 may range from 9 to 11m, being for example about 10m. This allows the base structure 110 to fit a tower diameter range of 8m at the tower base and 5.40 m in the top part. The above-mentioned dimensions are suitable for towers up to 170 m and may be adjusted on a case by case basis together with the length of the lifting booms 120 without departing from the scope of the invention.

The booms 120 are slewing and luffing booms for easy lifting and placing of the ring elements E of the tower T.

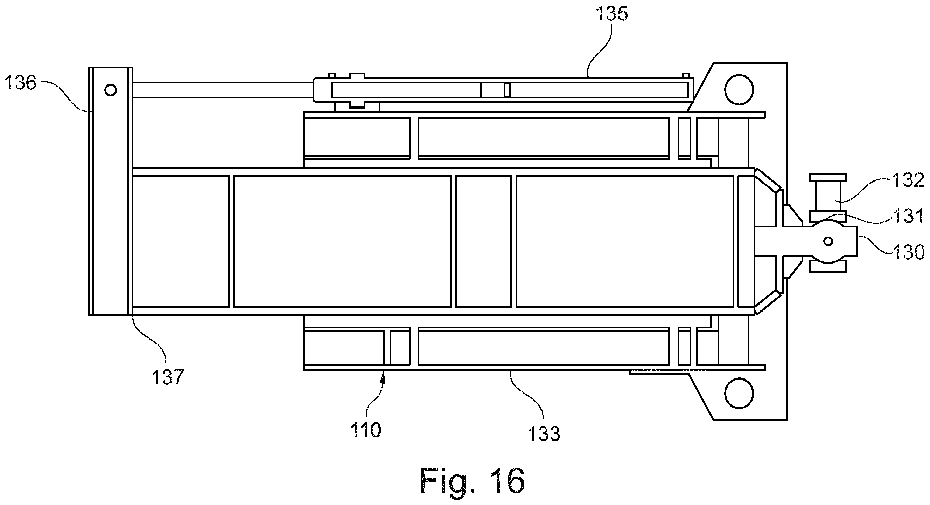

Each radial beam 130 comprises a cylindrical sleeve 137 of circular cross section configured to move radially in a corresponding housing 133 of a frame 116 of the base structure 110 as best shown in FIG.16. The housing 133 is of circular cross-section, allowing the sleeve 137 to rotate slightly about its longitudinal axis.

The inner end of each radial beam 130 is pointing towards the center of the tower T and is fitted with a joint 131. The latter is provided with vertical clamping jacks 132 on its top face. The joint 131 allows a rotation of the jacks 132 about a rotation axis substantially horizontal and perpendicular to the longitudinal axis of the sleeve 137.

A vertical coupling strut 136 couples the sleeve 137 to a hydraulic jack 135 serving to displace the radial beam 130 radially from a retracted position in which the sleeve 137 projects radially outward and a clamping position in which the radial beam 130 projects radially inward to engage a corresponding window 300 provided in the tower wall at the level of each elevated erection station. The sleeve 137 may rotate about a few degrees thanks to some play between the strut 136 and the jack 135.

Each winch 111 comprises as shown in FIG.2 a drum composed of two independent cable spinning zones 113 that are spun simultaneously thanks to hydraulic motors actioning cog wheels that are on either side of the drum.

Each winch 111 is preferably fixed on the base structure 110 using pins only, so that it can be easily separated from the supporting structure and reconnected in case of specific transportation that would make such disconnection necessary.

The drum main shaft is supported by two side flanges that are bolted to the frame 116 of the base structure 110.

The winch cables 114 are preferably made of high-strength and high abrasion resistance synthetic material so that they are as light as possible to ease the cable rewinding operation once the crane 1 has been lowered to the ground level after blade erection.

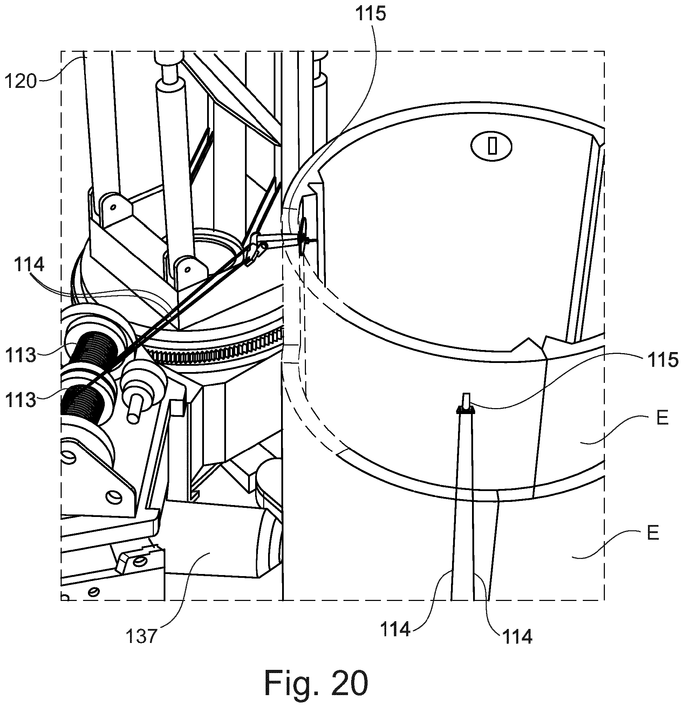

The two cables 114 of each winch 111 are permanently joined at their upper end at a hoisting cables anchoring device 115 that is used to anchor the crane to the tower T during hoisting and lowering thereof, as shown in FIG.20.

During these operations, the cables 114 of each winch 111 remain symmetrical relatively to a corresponding vertical symmetry plane.

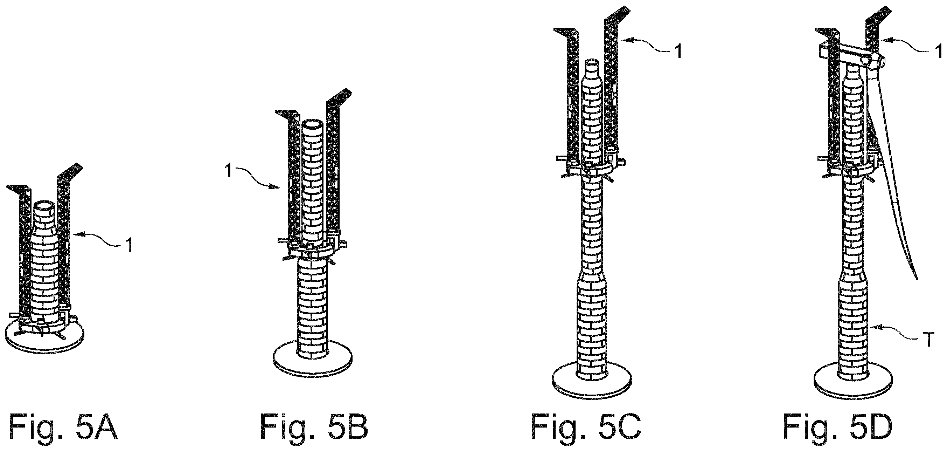

The system of the invention enables to erect the whole tower T together with the nacelle and the blades without the assistance of any additional crane and without having to install a first section of the tower onto which the crane 1 would be clamped, as illustrated in FIGs.5A to 5D.

FIG.5A shows the first tower elements E erection run being performed with the crane 1 resting on the foundation of the tower T.

FIG.5B shows the second tower elements E erection run being performed with the crane resting on first elevated erection station.

FIG.5C shows the third tower element E erection run with the crane resting on the second elevated erection station.

FIG. 5D shows the erection of nacelle and blades with the crane resting on the second elevated erection station.

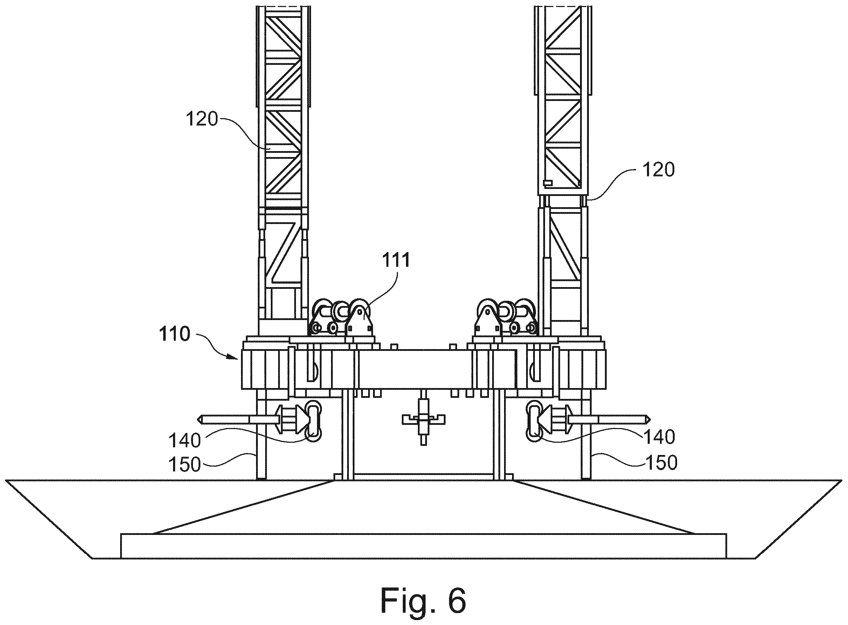

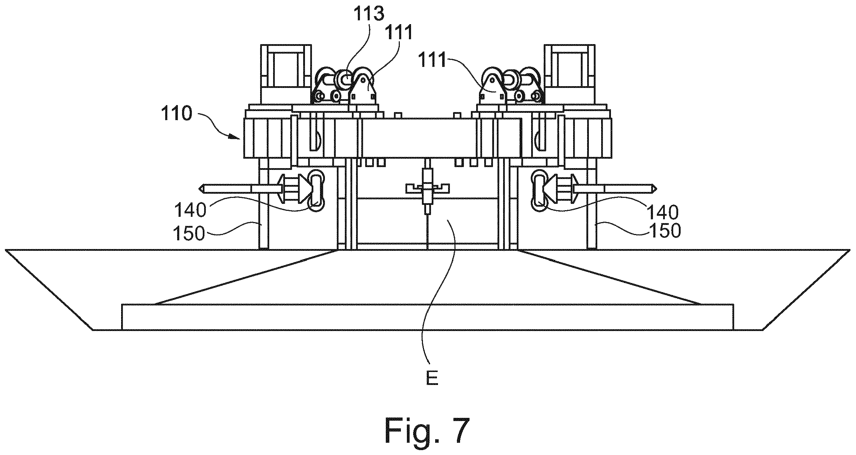

At the start of the erection sequence the crane 1 is preferably fixed to the foundation by means of post-tensioning bars, after having been brought and centered onto the foundation raft as shown in FIG.6. In this position, tower element erection can start as shown in FIG.7. However, since the first element connection may use, at the interface between the foundation and the base of the ring element, cement grout that requires curing time, the first ring element E is preferably installed prior to the crane mobilization as shown in FIG.7 so that no time is lost waiting for the grout to cure.

From the ground station, a significant number of ring elements E may be erected.

The number of element E erected in each run is defined by the length of the booms 120.

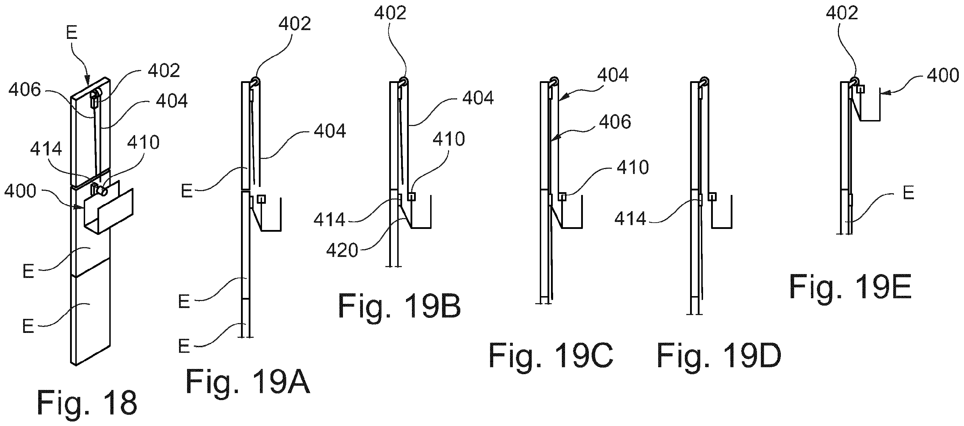

The element erection may be carried out with operators at ground level outside the tower and operators inside the tower on a mobile platform 400 that climbs the tower as the ring elements are erected, as will be described further below in reference to FIGs.19A to 19E.

In the disclosed embodiment, there are no operators on the crane 1, all operations being radio-controlled in accordance with a procedure that predefines which of the operators has control over the system at which stage.

Once the maximum number of elements E of a run has been erected, the crane 1 shall be hoisted and positioned at the next elevated erection station.

The crane is hoisted to that station using the winches 111.

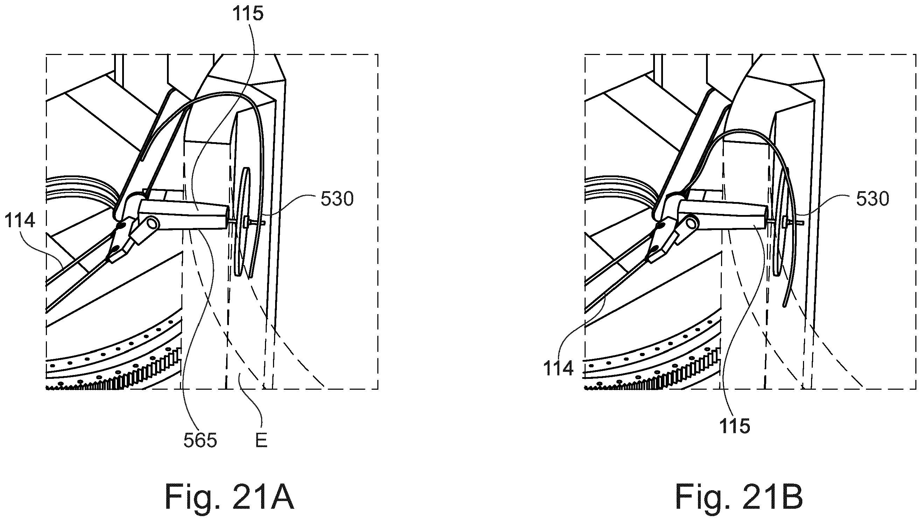

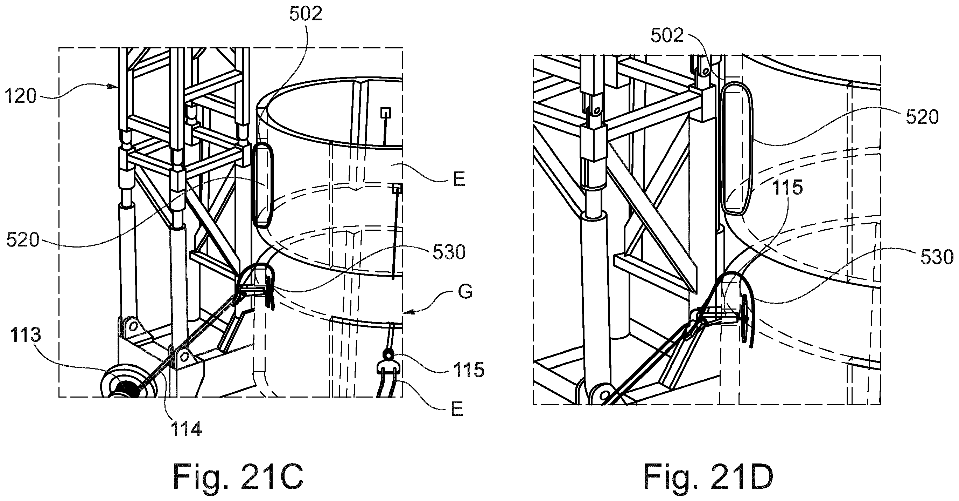

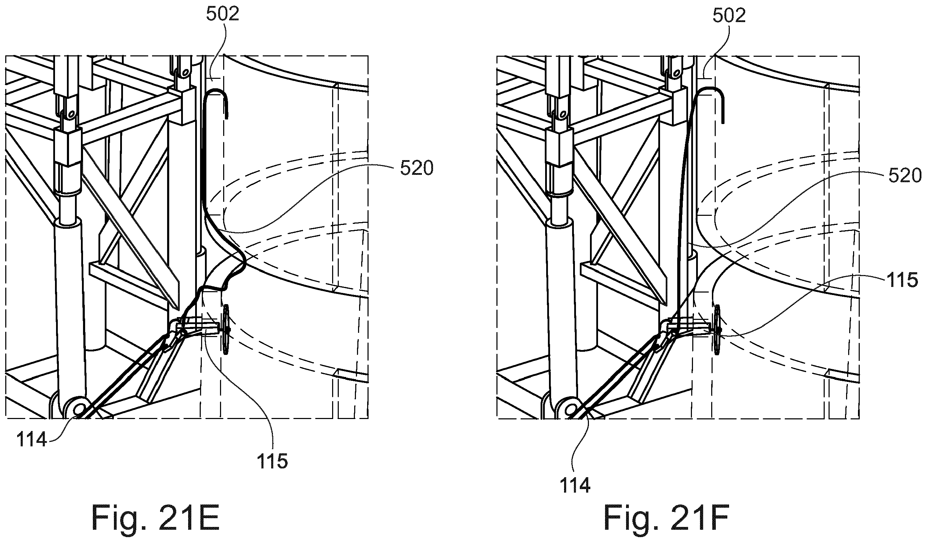

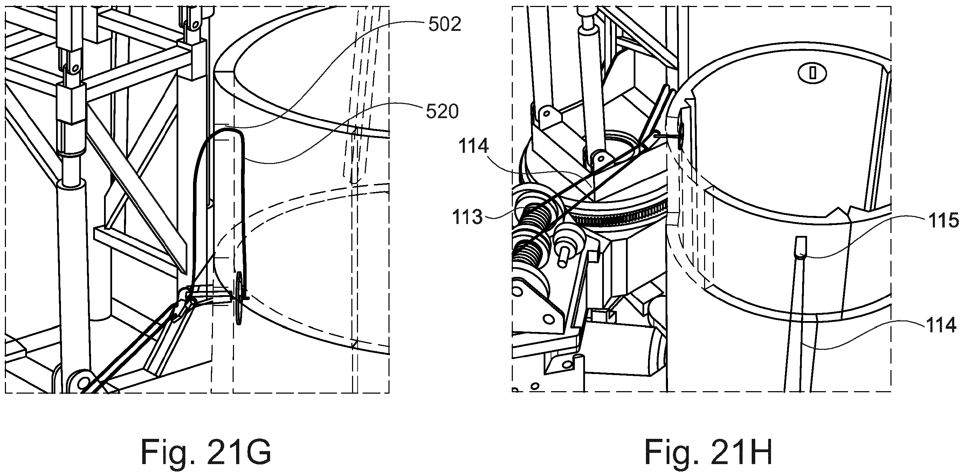

Before crane hoisting, the winch hoisting cables 114 are unwound and lifted to the top part of the last erected ring, using the booms 120. The last erected ring is provided with four recesses 565 as shown in FIG.21A, where the cable anchoring devices 115 provided at the end of the winch cables 114 may be clamped.

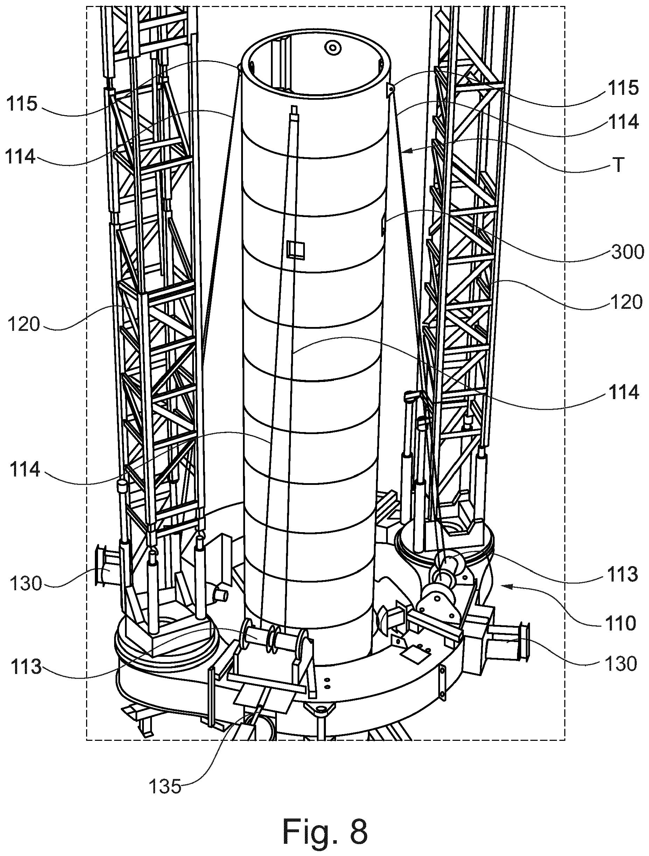

FIG.8 shows the crane 1 ready to be hoisted from the ground station to the first station.

The two booms 120 are used to erect the ring elements E either alternatively one after the other or in a different order. This allows shortening of the erection cycle since the next spreader beam installation may take place at ground level using one boom 120 while the ring element E being placed is still being hanged from the other boom 120.

Before crane hoisting, the booms 120 will be positioned preferably upright in the vertical position and symmetrically relatively to the centerline of the tower, in order to avoid unbalancing.

The base structure 110 is fitted with constantly monitored inclinometers, and the winches 111 are controlled automatically in order to maintain the base structure 110 horizontal.

Meanwhile the roller guides 140 are kept in contact with the tower walls by corresponding hydraulic jacks. The presence of the springs combined with these jacks ensures continuous and smooth contact on the tower surface in case of unbalancing of forces due to wind or any parasitic forces. The matching of the distance between opposite roller guides 140 and the tower geometry is controlled automatically, in order to ensure the roller guides 140 always apply the desired contact forces onto the wall of the tower.

The crane is lifted for example at a maximum speed of 4 m/min and at wind speed up to 20 m/s.

Power is preferably supplied to the crane 1 by a generator (not shown) located at ground level and that remains in this position during the tower erection. Therefore, when the crane 1 is hoisted, the energy connection cable located on a drum under the base structure 110 will be unwound so that the hydraulic power unit that is placed on the crane remains energized. The size of the cable and drum depends on the height of the tower to be erected. The cable drum may be fitted with a small engine that will control its unwinding and the lifted height in order to ensure that the electric cable only withstands its own weight and is not subject to additional tension. During lowering, the process is reversed, and the automation is designed accordingly.

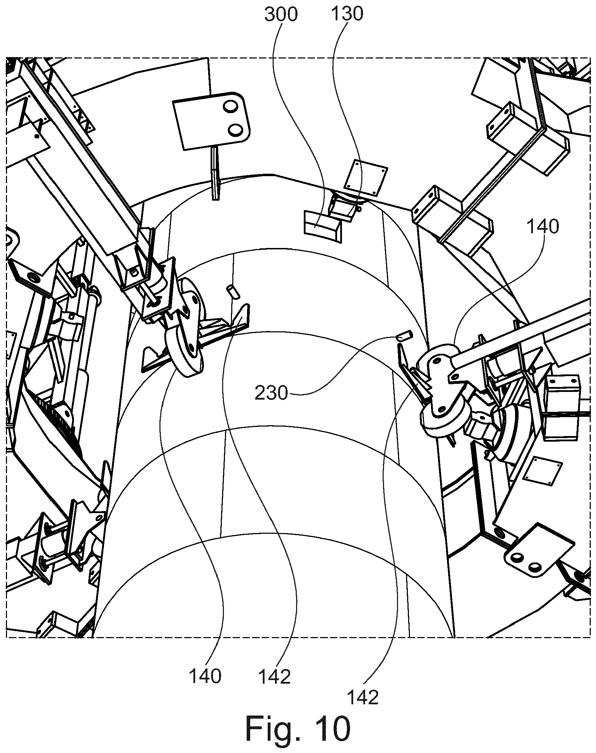

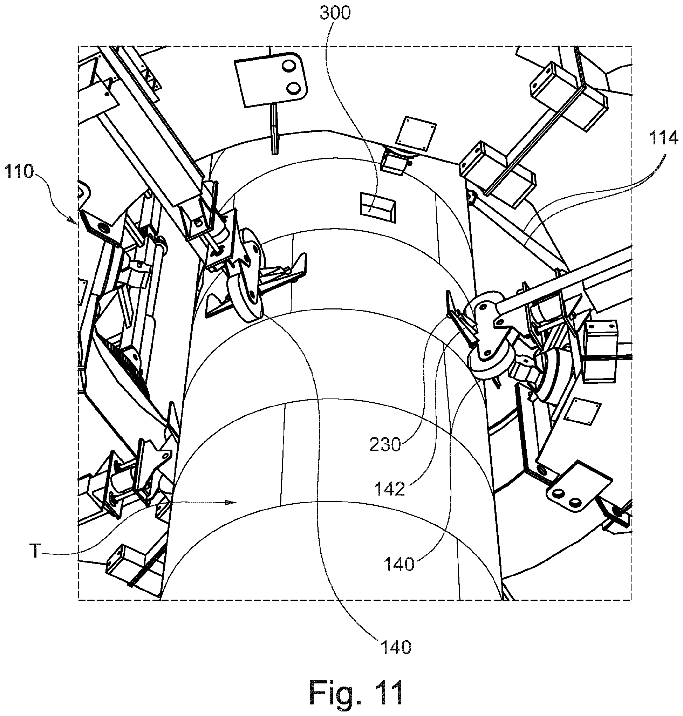

In order to ensure that the crane 1 is accurately positioned at the next elevated station, the front face of the guide rollers 140 is equipped with guides 142 that allow precise docking of the crane against temporary docking bars 230 threaded through holes provided at the right level and azimuth in the wall of the ring element E just below the elevated station, as shown in FIGs. 10 and 11. In FIG. 10 the crane 1 is shown approaching to the docking bars 230.

To allow the lifting movement of the crane 1, the radial beams 130 are kept in the retracted position, where they protrude from the radially outer circumference of the base structure 110 in order to leave a free space between the inner circumference of base structure 110 and the tower wall. The movement of each radial beam 130 is controlled using the corresponding jack 135.

Once the crane 1 has docked, operators inside the tower mobile platform 400 will go up to the elevated station level, i.e. the ring element E provided with the windows 300.

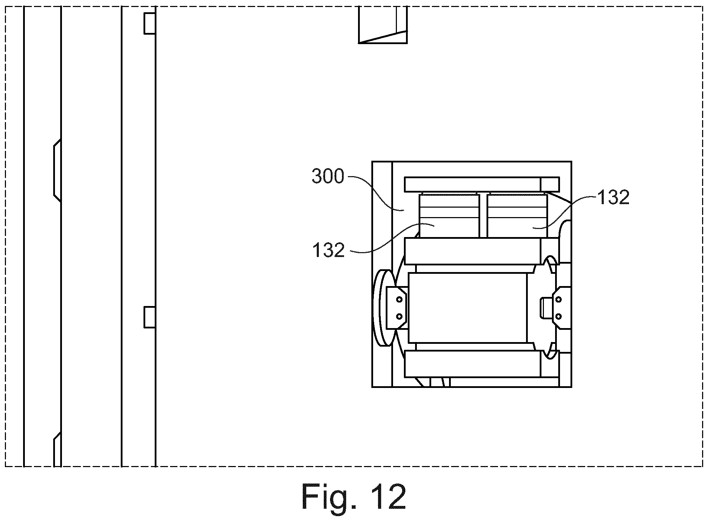

From the platform 400, they will be able to confirm that the crane 1 is at the right level, following which they will cause the radial beams 130 to move toward the center of the tower, so that their ends provided with the joints 131 be positioned at mid wall inside the windows 300, as shown in Fig.12, Each window 300 is having appropriate dimensions to allow the insertion of the inner end of the radial beam 130.

The docking bars 230 are positioned at a level allowing sufficient gap around the joints 131 and the window's sills.

Once the joints 131 are in place, the hoisting cables 114 may be released and the crane 1 will then rest on the windows' sills.

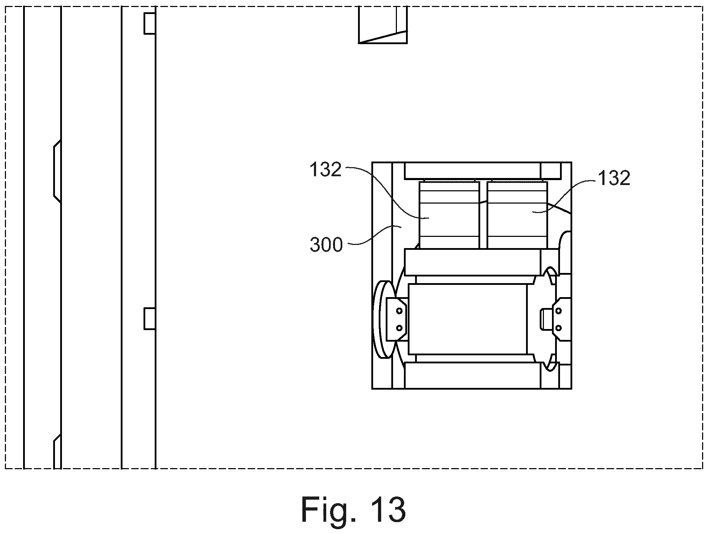

After the load transfer is complete, the jacks 132 extend so that they are bearing against the windows' lintels and safety nuts may be screwed in position for safe blockage of any uplift forces as shown in Fig.13.

When the crane 1 is secured onto the tower, the operators inside the mobile platform 400 may go a ring element E below and remove the docking bars 230. Then they may go up the last erected ring element E and remove the anchoring devices 115 from the tower wall.

Once this is done, the anchoring devices 115 may be fixed onto the booms 120 hooks and lowered on corresponding supporting racks present on the base structure 110.

At this stage, post-tensioning cables (not shown) may be installed and stressed from blisters provided on the last erected ring element and their bottom anchorage in the foundation. After post-tensioning is complete, the tower erection process may resume.

Lifting heavy rings, nacelle or blades may induce important forces in the base structure 110.

To avoid severe structural issues, in addition to the radial beams 130 being placed in a center plane of the base structure 110, the sleeves 137 are of a circular cross section so that that may rotate freely inside their housing 113, which is also of circular cross section, as detailed above. As such, the radial beams 130 mainly transfer vertical forces to the concrete wall, either downward or upward, and very small horizontal forces due to wind.

Once the second run of ring elements E has been erected, the same hoisting process shall be implemented to lift the crane to the next elevated station.

The operator inside the mobile platform 400 will use the booms 120 to pick up the anchoring devices 115 provided at the ends of the hoisting winches cables 114. These devices may be placed on racks on the top of the base structure 110 after they have been used for the lifting. This operation shall be carried out using the booms 120, the hooks of which are preferably provided with guiding devices (not shown) in order to ease and ascertain the picking up of the anchoring devices 115.

Once the anchoring devices 115 are clamped onto the concrete wall of the last erected ring element E, the crane hoisting, docking and connecting operation as described above may be implemented.

The lifting sequence of the mobile platform 400 to the next anchor point will now be described with reference to FIGs.18 and 19A to 19E.

The last erected ring element E comes with pulleys 402 (at least three) fixed on brackets at the top of ring element wall as shown in Fig. 19A. Each pulley 402 is provided with a steel messenger wire 404 that preferably has the same structural capacity as that of each of the platform winches 410.

The messenger wire 404 is attached to a pulling wire 406 that will allow subsequent lifting of the messenger wire.

Once a new ring element is set over the last installed ring element, the winches 410 of the platform are attached to the messenger cables as shown in Fig.19B.

The messenger wires 404 are lifted using the pulling wires 406, and at the same time the winches 410 are unreeled as shown in Fig.19C.

Once at their final position, the messenger wires 404 are attached to the tower T on dedicated brackets 414; the messenger cables 404 are also twined with fall prevention cables 420 as shown in Fig.19D.

In addition, once the mobile platform 400 has reached its working level for next ring erection, security cables 420 connecting the platform with the ring element wall are attached and the lifting winches 410 released in order to fully transfer the platform weight and loading to the security cables 420 as shown in Fig.19E. The next ring element lifting operation can then start.

To lower the platform 400 at the end of the day shift, or whenever required, the winch cables will be tensioned in order to release the security cables 420 and disconnect them from the wall. The platform will then be lowered to the required level using the platform winches 410.

When the final elevated station is reached, the tower erection continues until the last ring element is erected. The last element will be erected with a steel transition piece already fixed on its top at ground level. Post-tensioning cables (not shown) running from the bottom flange of the steel transition piece down to the foundation are installed. Then the nacelle and the blades can be installed. The nacelle can be installed in separate pieces lifted one after the other and assembled on the top of the tower. The nacelle installation can be faster if the two booms 120 are combined for tandem lift, which allows almost double lifting capacity as compared to that of one boom only. Similarly, the blades can be lifted separately or together with the rotor using tandem lift.

The lowering of the crane 1 is to take place after the completion of the erection of the tower, the nacelle and the blades. The lowering operation is not more complex than the hoisting operation. A critical part of the lowering operation is the retrieval of the anchoring devices 115 that were left fixed at the top part of the last ring element before the previous crane hoisting operation. These devices 115 are outside the tower and only their clamping bars, bolted onto the wall, are accessible from inside the tower, as shown in Fig.20.

The retrieval of these anchoring devices 115 is made possible thanks to light telescopic beams 500 that are inserted through corresponding holes 502 cast in the ring element just above that where the anchoring devices 115 are fixed.

Before starting the last erection run, the anchoring devices 115 are connected to small ropes 520, that will in turn be connected to the first ring element of the last erection run. The last ring element is provided with four small openings 502 above the anchoring devices 115 and through which the beams 500 will later be inserted.

Operators from the tower mobile platform 400 fix small ropes 530 onto the anchoring devices 115 and arrange them hanging inside the tower as shown in FIGs.21A and 21B.

The first ring element of the last run is lifted and placed at the plumb of the tower with a gap G with the previously erected ring element E, as shown in FIG.21C. This first ring is provided with four small openings 502 through which the four small ropes 520 are placed.

Both ends of each rope 520 are fastened onto the concrete wall inside the ring to prevent them from falling during the hoisting process.

The operators on the inner mobile platform will tie together the small ropes 530 connected to the anchoring devices 115 and the small ropes 520 fixed onto the new ring element E and passing through the small openings 502 as shown in FIG. 21E.

Once connected the ropes 520 and 530 will be pushed outside the tower.

The new ring element E is finally placed and connected onto the bottom ring element E, with the four ropes 520 securely fastened onto the inside face of the ring wall.

The tower erection process continues up to the end of blades installation.

The crane 1 is then lowered to the ground. This operation starts in the same manner as when the crane is hoisted, i.e. apply pressure from the roller guides 140, release the safety locks of the uplift jacks 320 at the ends of the radial beams 130 and close these jacks 320, tension the winches hoisting cables 114 in order to lift the crane 1, retract the radial beams 130, and lower the crane 1.

The crane 1 is now resting on the foundation and the hoisting cables 114 are tensioned only with their self-weight.

Four small telescopic aluminum beams 500 provided with pulleys at both ends are inserted through the small openings 502 of the first erected ring element of the last run. Prior to being inserted, the small ropes 530 shall be driven through the pulleys' grooves with their ends inside the tower still fastened onto the ring wall. These ends will then be connected to "rope pass-through"-type of winches (commercialized under Tirak brand or similar) fixed onto the ring element wall. The ropes 530 are then slightly stressed using the "rope pass-through"-type winches in order to remove the slack between the telescopic beam pulley and anchoring devices 115.

The anchoring devices 115 are disconnected from the inner ring wall and pushed outside the Tower T. At the same time, the rope pass-through type winches shall slightly pull the cables up in order to avoid contact with the tower outer face.

The anchoring devices 115 are lowered while at the same time the hoisting winches cables 114 are wound.

The small ropes connected to the rope pass-through type winches are then disconnected by an operator standing on the crane, and they shall be wound up using the same winches, which is to be removed at the end of the process.

Similarly, the telescopic beams 500 shall be removed from the openings 502, which are to be closed using plastic caps (not shown) fixed on sockets provided on the inside face of the concrete ring.

Once the crane 1 has reached the ground, it is desirable to have it transferred to the next erection site in the shortest possible time. To achieve fast transfer time, the crane is configured so that it can be split automatically into two halves that can be transferred independently and reconnected rapidly.

To this end, the booms 120 are each configured to be foldable easily and automatically and the base structure 110 is configured so that it can be split in two halves 110' automatically.

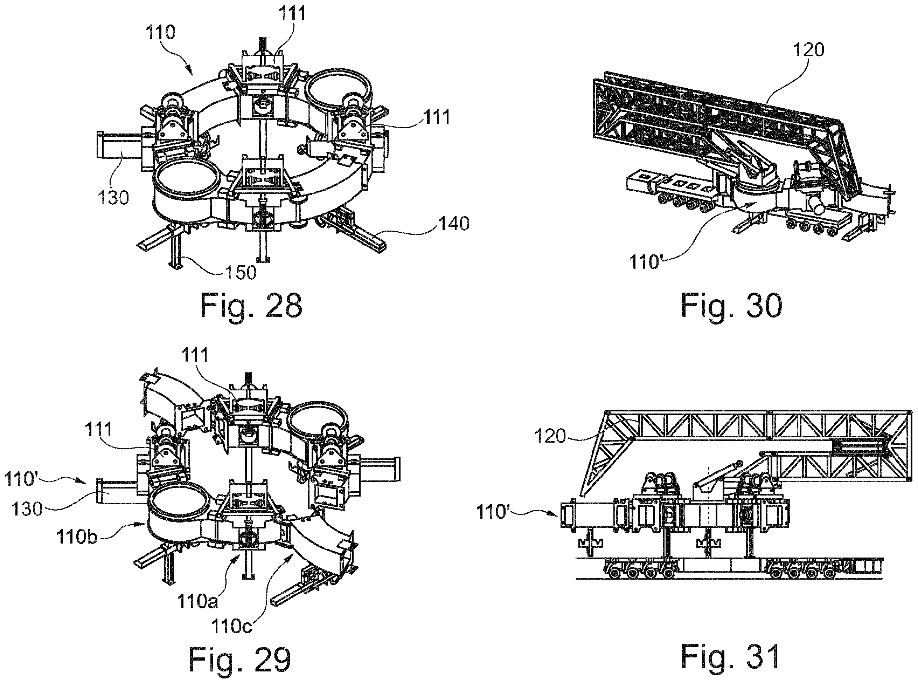

Each half of the crane 1 can then be transported to the next erection site using standard self-propelled modular hydraulic trailers as shown in FIGs.30 and 31.

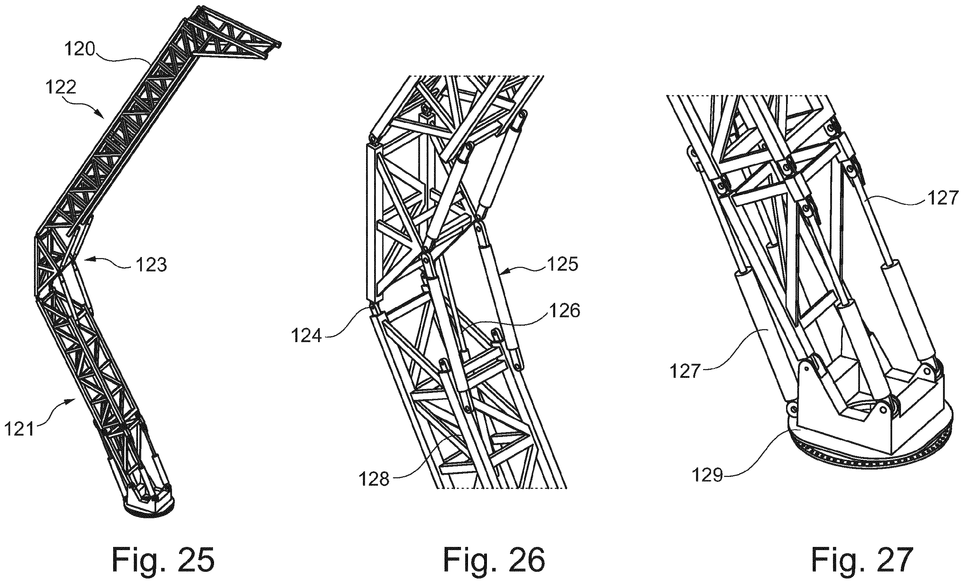

Each boom 120 is made of three main parts, i.e. a bottom truss 121, a top truss 122 with an articulated jib, and a central part 123 around which the bottom and the top trusses are hinged, as shown in FIGs.25 to 27.

The folding is made possible thanks to the central part being connected to the top and bottom trusses by means of pin joints 124 on the outer chord of the boom and articulated telescopic struts 125 on the inner chord, and provided with two central folding jacks 126 that are placed inside the truss. In addition, the articulated members are provided with hydraulic remotely controlled jacks on one side and guiding devices 128 that will take the articulated members out of the way when folding.

In addition, the base 129 of the boom 120 is provided with hydraulic jacks 127. The jacks on the inner side allow the luffing movement of the boom, and those on the outer side, the base folding jacks, allow the folding of the boom in combination with the central folding jacks placed inside the central part of boom that acts as a hinge.

The above folding operations are carried out using remote-control equipment and there are no operators removing any pins or connections, except for the removal, on the top of the base structure, of some sections of guard rails that are on the way of the folding booms.

Once folded the two sections of the boom are fixed together and connected to the half base structure.

In addition, the third legs may be activated in order to ensure that the vertical load transfer is made over 6 bearing points.

The base structure 110 is preferably made of several sections: the booms 120 supporting sections 110b, i.e. two units, the radial beams 130 and winches 111 supporting sections 110a, i.e. four units, and openings sections 110c that are hinged onto and connected to the sections 110c, i.e. two units.

Once the booms 120 are folded, the openings sections 110c will be automatically disconnected from the sections 110a to which they are connected.

The opening sections 110c will be moved anti-symmetrically in order to keep balancing of the weight of the two halves 110' thus created, as shown in Fig.29.

When this operation is completed, the crane can then be disconnected and the generator and electrical cables and hydraulic pipes connecting the two halves can also be disconnected. The crane is then ready for transport to the next pad.

Each half of the crane may be transported separately using Self-Propelled hydraulic Modular Trailers (SPMTs) as shown in FIGs.30 and 31. One may use a standard 4-axle SPMT and one 4-axle split SPMT linked by a purpose-designed connection beam. With such arrangement providing required stability, the site road, connecting to the next pad, can have a width limited to 4.50 m.

The placing of each half of the crane onto the next pad, can be made smoothly thanks to the SPMT to adjust the setting out of its cargo within limited tolerances. The crane generator shall also be brought and connected to the first half for the load transfer. When the crane is in position, the legs resting on the foundation will first be connected though loosely at that stage and vertical jack of the third leg will be actioned while the SPMT finally lowers the half crane and transfer its whole load onto the ground.

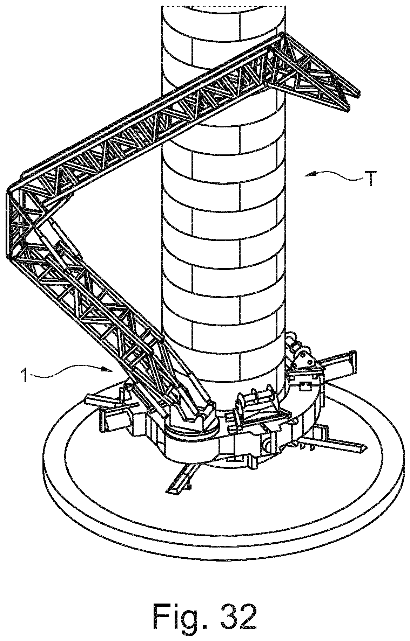

The SPMTs will then go back to the previous foundation and pick up the second crane half. Once the same operation as that above is completed, the two opening sections will be closed and reconnected. The booms 120 can then be unfolded and the crane is ready for erection as shown in Fig.32.

## Claims

1. A system for the erection of a tower (T) comprising superimposed tower ring elements (E), the system comprising:
- A self-climbing crane (1) comprising:
∘ An annular base structure (110) to be positioned around the tower under construction,
∘ movable radial beams (130) carried by the base structure and configured to engage into corresponding docking zones of the tower under construction to immobilize the base structure (110) relative to the tower,
∘ hoisting winches (111) carried by the base structure (110) for elevating the crane along the tower under construction, **characterised by**
two slewing lifting booms carried by said base structure.

2. The system of claim 1, the slewing lifting booms (120) being luffing booms.

3. The system of any one of the preceding claims, the crane (1) comprising roller guides (140) configured for rolling on an external surface of the tower for guiding the base structure along the tower during its vertical displacement, the roller guides (140) being movable radially to adapt to the outside diameter of the tower and the system comprising a mechanism to control the radial displacement of the roller guides to ensure a desired control force is applied by the roller guides to the tower.

4. The system of any one of the preceding claims, each hoisting winch (111) comprising a pair of drums with respective hoisting cables (114) wound thereon and connected to one another at one end.

5. The system according to any one of the preceding claims, the docking zones of the tower comprising windows (300) into which the radial beams (130) can engage, each radial beam (130) carrying a clamping mechanism to clamp the beam inside the window after insertion therein, the clamping mechanism preferably comprising vertical jacks (132).

6. The system according to any one of the preceding claims, each radial beam (130) being rotatable around a longitudinal axis thereof relative to the base structure, each radial beam preferably being of circular cross section.

7. The system according to any one of the preceding claims, the base structure (110) comprising two halves (110') that can be disassembled from each other for transportation, each half comprising a boom supporting section and two radial beam and winch supporting sections.

8. A method for erecting a tower comprising superimposed ring elements (E), using a system as defined in any one of the preceding claims, the method comprising:
- Assembling a first section of the tower by assembling ring elements with the crane (1) resting on the ground,
- after erection of the first section,
o assembling a second section of the tower with the crane resting on the previously assembled first section,
o assembling a third section with the crane resting on the previously assembled second section.

9. The method of claim 8, comprising erecting a nacelle and blades of a wind turbine using the crane (1) resting on a section of the tower.

10. The method according to any one of claims 8 and 9, the tower comprising windows (300) and the method comprising securing the crane to the tower under construction by engaging the radial beams (130) into the windows, and after insertion of a radial beam in a corresponding window, clamping said beam inside the window.

11. The method according to any one of claims 8 to 10, comprising stressing post-tensioning cables extending between an anchorage in a foundation of the tower and a top ring element of an erected section, before hoisting the crane along that section.

12. The method according to any one of claims 8 to 11, comprising lifting a mobile platform (400) inside the tower under construction for installation of hoisting cables anchoring devices (115) on top of an erected section.

13. The method of any one of claims 8 to 12, the tower (T) being of a height greater that 100m.

## Patentansprüche

1. System zum Errichten eines Turms (T), der übereinanderliegende Turmringelemente (E) umfasst, wobei das System Folgendes umfasst:
- einen Selbstkletterkran (1), umfassend:
o eine ringförmige Basisstruktur (110), die um den im Bau befindlichen Turm zu positionieren ist,
o bewegliche Radialträger (130), die von der Basisstruktur getragen und dazu ausgelegt sind, in entsprechende Andockzonen des im Bau befindlichen Turms einzugreifen, um die Basisstruktur (110) relativ zu dem Turm zu immobilisieren,
o von der Basisstruktur (110) getragene Hubwinden (111) zum Anheben des Krans entlang des im Bau befindlichen Turms, **gekennzeichnet durch** zwei von der Basisstruktur getragene schwenkbare Hubausleger.

2. System nach Anspruch 1, wobei die schwenkbaren Hubausleger (120) Wippausleger sind.

3. System nach einem der vorhergehenden Ansprüche, wobei der Kran (1) Rollenführungen (140) umfasst, die zum Rollen auf einer externen Fläche des Turms zum Führen der Basisstruktur entlang des Turms während seiner vertikalen Verschiebung ausgelegt sind, wobei die Rollenführungen (140) radial beweglich sind, um sich an den Außendurchmesser des Turms anzupassen, und das System einen Mechanismus zum Steuern der radialen Verschiebung der Rollenführungen umfasst, um sicherzustellen, dass eine gewünschte Steuerkraft durch die Rollenführungen auf den Turm aufgebracht wird.

4. System nach einem der vorhergehenden Ansprüche, wobei jede Hubwinde (111) ein Paar Trommeln mit jeweiligen Hubseilen (114) umfasst, die darauf gewickelt und an einem Ende miteinander verbunden sind.

5. System nach einem der vorhergehenden Ansprüche, wobei die Andockzonen des Turms Fenster (300) umfassen, in die die Radialträger (130) eingreifen können, wobei jeder Radialträger (130) einen Spannmechanismus zum Einspannen des Trägers in dem Fenster nach Einführen dort hinein trägt, wobei der Spannmechanismus vorzugsweise vertikale Hebezeuge (132) umfasst.

6. System nach einem der vorhergehenden Ansprüche, wobei jeder Radialträger (130) um eine Längsachse davon relativ zu der Basisstruktur drehbar ist, wobei jeder Radialträger vorzugsweise einen kreisförmigen Querschnitt aufweist.

7. System nach einem der vorhergehenden Ansprüche, wobei die Basisstruktur (110) zwei Hälften (110') umfasst, die zum Transport voneinander demontiert werden können, wobei jede Hälfte einen Auslegerstützabschnitt und zwei Radialträger- und Windenstützabschnitte umfasst.

8. Verfahren zum Errichten eines Turms, der übereinanderliegende Ringelemente (E) umfasst, unter Verwendung eines Systems wie in einem der vorhergehenden Ansprüche definiert, wobei das Verfahren Folgendes umfasst:
- Zusammenbauen eines ersten Abschnitts des Turms durch Zusammenbauen von Ringelementen, wobei der Kran (1) auf dem Boden aufliegt,
- nach Errichtung des ersten Abschnitts,
o Zusammenbauen eines zweiten Abschnitts des Turms, wobei der Kran auf dem zuvor zusammengebauten ersten Abschnitt aufliegt,
o Zusammenbauen eines dritten Abschnitts, wobei der Kran auf dem zuvor zusammengebauten zweiten Abschnitt aufliegt.

9. Verfahren nach Anspruch 8, umfassend Errichten einer Gondel und von Blättern einer Windenergieanlage unter Verwendung des Krans (1), der auf einem Abschnitt des Turms aufliegt.

10. Verfahren nach einem der Ansprüche 8 und 9, wobei der Turm Fenster (300) umfasst und das Verfahren Befestigen des Krans an dem im Bau befindlichen Turm durch Eingreifen der Radialträger (130) in die Fenster und, nach Einsetzen eines Radialträgers in ein entsprechendes Fenster, Einspannen des Trägers innerhalb des Fensters umfasst.

11. Verfahren nach einem der Ansprüche 8 bis 10, umfassend Spannen von Vorspannseilen, die sich zwischen einer Verankerung in einem Fundament des Turms und einem oberen Ringelement eines errichteten Abschnitts erstrecken, vor Anheben des Krans entlang dieses Abschnitts.

12. Verfahren nach einem der Ansprüche 8 bis 11, umfassend Anheben einer mobilen Plattform (400) innerhalb des im Bau befindlichen Turms zur Installation von Hubseilverankerungsvorrichtungen (115) auf einem errichteten Abschnitt.

13. Verfahren nach einem der Ansprüche 8 bis 12, wobei der Turm (T) eine Höhe größer als 100 m aufweist.

## Revendications

1. Système d'érection d'une tour (T) comprenant des éléments annulaires de tour superposés (E), le système comprenant :
- une grue automontante (1) comprenant :
o une structure de base annulaire (110) destinée à être positionnée autour de la tour en construction,
o des poutres radiales mobiles (130) portées par la structure de base et configurées pour venir en prise dans des zones d'accueil correspondantes de la tour en construction pour immobiliser la structure de base (110) par rapport à la tour,
o des treuils de levage (111) portés par la structure de base (110) pour élever la grue le long de la tour en construction, **caractérisé par** deux flèches de levage pivotantes portées par ladite structure de base.

2. Système selon la revendication 1, les flèches de levage pivotantes (120) étant des flèches relevables.

3. Système selon l'une quelconque des revendications précédentes, la grue (1) comprenant des guides à rouleaux (140) configurés pour rouler sur une surface externe de la tour pour guider la structure de base le long de la tour pendant son déplacement vertical, les guides à rouleaux (140) étant mobiles radialement pour s'adapter au diamètre extérieur de la tour et le système comprenant un mécanisme pour commander le déplacement radial des guides à rouleaux pour garantir qu'une force de commande souhaitée est appliquée par les guides à rouleaux à la tour.

4. Système selon l'une quelconque des revendications précédentes, chaque treuil de levage (111) comprenant une paire de tambours avec des câbles de levage (114) respectifs enroulés sur ceux-ci et reliés l'un à l'autre au niveau d'une extrémité.

5. Système selon l'une quelconque des revendications précédentes, les zones d'accueil de la tour comprenant des fenêtres (300) dans lesquelles les poutres radiales (130) peuvent venir en prise, chaque poutre radiale (130) portant un mécanisme de serrage pour serrer la poutre à l'intérieur de la fenêtre après l'insertion dans celle-ci, le mécanisme de serrage comprenant de préférence des vérins verticaux (132).

6. Système selon l'une quelconque des revendications précédentes, chaque poutre radiale (130) étant rotative autour d'un axe longitudinal de celle-ci par rapport à la structure de base, chaque poutre radiale étant de préférence de section transversale circulaire.

7. Système selon l'une quelconque des revendications précédentes, la structure de base (110) comprenant deux moitiés (110') qui peuvent être désassemblées l'une de l'autre pour le transport, chaque moitié comprenant une section de support de flèche et deux sections de poutre radiale et de support de treuil.

8. Procédé d'érection d'une tour comprenant des éléments annulaires superposés (E), utilisant un système tel que défini selon l'une quelconque des revendications précédentes, le procédé comprenant :
- l'assemblage d'une première section de la tour en assemblant des éléments annulaires avec la grue (1) reposant au sol,
- après l'érection de la première section,
o l'assemblage d'une deuxième section de la tour avec la grue reposant sur la première section précédemment assemblée,
o l'assemblage d'une troisième section avec la grue reposant sur la deuxième section précédemment assemblée.

9. Procédé selon la revendication 8, comprenant l'érection d'une nacelle et de pales d'une éolienne à l'aide de la grue (1) reposant sur une section de la tour.

10. Procédé selon l'une quelconque des revendications 8 et 9, la tour comprenant des fenêtres (300) et le procédé comprenant la fixation de la grue à la tour en construction par la mise en prise des poutres radiales (130) dans les fenêtres, et après l'insertion d'une poutre radiale dans une fenêtre correspondante, le serrage de ladite poutre à l'intérieur de la fenêtre.

11. Procédé selon l'une quelconque des revendications 8 à 10, comprenant la mise en tension de câbles de post-tension s'étendant entre un ancrage dans une fondation de la tour et un élément annulaire supérieur d'une section érigée, avant le levage de la grue le long de cette section.

12. Procédé selon l'une quelconque des revendications 8 à 11, comprenant le levage d'une plateforme mobile (400) à l'intérieur de la tour en construction pour l'installation de dispositifs d'ancrage de câbles de levage (115) au-dessus d'une section érigée.

13. Procédé selon l'une quelconque des revendications 8 à 12, la tour (T) étant d'une hauteur supérieure à 100 m.
